# EUROPEAN PATENT SPECIFICATION

(11) **EP 3 130 967 B1**
(45) Date of publication and mention of the grant of the patent: **12.05.2021**
(21) Application number: 16181647.5
(22) Date of filing: 28.07.2016
(51) Int. Cl.: G04G 13/02

(54) **METHOD FOR MANAGING AN ALARM CLOCK AND SYSTEM ASSOCIATED**
VERFAHREN ZUM VERWALTEN EINES WECKERS UND EINRICHTUNG DAZU
PROCÉDÉ DE GESTION D'HORLOGE D'ALARME, ET SYSTÈME ASSOCIÉ

(30) Priority: 13.08.2015 CN 201510497767
(43) Date of publication of application: 15.02.2017
(73) Proprietor: Xiaomi Inc., Beijing 100085 (CN)
(72) Inventor: JIA, Weiguang, Haidian District, Beijing 100085 (CN); FU, Qiang, Haidian District, Beijing 100085 (CN); HOU, Enxing, Haidian District, Beijing 100085 (CN)
(74) Representative: Robson, Aidan John

(56) References cited:
- EP-A2- 2 777 484
- WO-A1-2011/027266
- US-A1- 2005 154 330
- US-A1- 2013 154 838

## Description

### TECHNICAL FIELD

The present disclosure generally relates to the field of smart home technology, and more particularly to a method and a device for managing an alarm clock, as well as an electronic device.

### BACKGROUND

An alarm clock, an essential tool for people's daily life, may enable a user to wake up in time by presetting time to execute a prompt, so as to prevent a time-based plan (e.g., going to school, going to work, going out) from being delayed.

Sometimes, a user may wake up around the predetermined time without the alarm clock because a "bioclock" has been formed with daily work and life habits. However, the alarm clock in the related art still gives the prompt according to the preset time, which may conversely disturb the user, in particular those in a bad mood after waking up in the morning

US 2013/154838 A1 discloses a method of dismissing or adjusting an alarm if the user is determined to be awake. The method includes sensing a physiological parameter of the user through a wearable device, detecting whether the user is awake, and adjusting the alarm in accordance with the user's sleep state. The method is implemented in a wireless communication device including a wearable device for adjusting or dismissing an alarm based on the detected sleep state of the user.

EP 2 777 482 A2 discloses a mobile terminal and a method of controlling the same, by which a snooze function for an alarm can be activated depending on whether a user sleeps after outputting the alarm.

US 2005/154330 A1 discloses a device that monitors a user's sleep cycles and operates to sound an alarm to awaken the user at an optimal point within a sleep cycle.

### SUMMARY

An object of the present disclosure is to provide a method and a device for managing an alarm clock, and an electronic device, so as to overcome defects in the related art.

Accordingly, a first aspect of the present invention, defined in claim 1, provides a method for managing an alarm clock in wireless communication with an external device provided with a movement sensor.

A further aspect of the present invention, defined in claim 3, provides a system comprising an alarm clock and an external device provided with a movement sensor, the alarm clock and the external device configured for being in wireless communication one with the other.

Preferred embodiments of the present invention are defined in the dependent claims.

According to embodiments of the present disclosure in accordance with the present invention, there is provided a method for managing an alarm clock, including:
acquiring a signal indicating movement of a user; and
cancelling a prompt if the user is in a moving state when a time to execute the prompt preset in the alarm clock is up.

In an example of the present disclosure not being part of the present invention, acquiring the signal indicating movement of the user includes: detecting the movement of the user by a movement sensor disposed in the alarm clock.

In the present invention, acquiring the signal indicating movement of the user includes:
establishing a wireless communication with a device equipped with a movement sensor; and
receiving the movement of the user detected by the movement sensor via the wireless communication.

In an example of the present disclosure not being part of the invention, wherein the device equipped with the movement sensor is a wearable device, the signal indicating movement sensor includes: a physiological parameter sensor.

In preferred embodiments of the invention, the signal indicating movement sensor includes: an infrared sensor located around the user and having a receiving-and-sending window facing towards an area where the user is.

Moreover, the method of the present invention includes:
delaying the time to execute the prompt for a predetermined time period, and creating a corresponding delayed prompt; and
acquiring the signal indicating movement of the user within the predetermined time period periodically, and cancelling the delayed prompt if the user is in the moving state.

According to examples of the present disclosure not being part of the present invention, there is provided a device for managing an alarm clock, including:
an acquiring unit, configured to acquire a movement of a user; and
a first cancelling unit, configured to cancel a prompt if the user is in a moving state when a time to execute the prompt preset in the alarm clock is up.

Alternatively, the acquiring unit includes: a detecting sub-unit, configured to detect the movement of the user by a signal indicating movement sensor disposed in the alarm clock.

Alternatively, the acquiring unit includes:
an establishing sub-unit, configured to establish a wireless communication with a device equipped with a movement sensor; and
a receiving sub-unit, configured to receive the signal indicating movement of the user detected by the movement sensor via the wireless communication.

Alternatively, in the case, not being part of the present invention, that the device equipped with the movement sensor is a wearable device, the movement sensor includes: a physiological parameter sensor.

Alternatively, the device, which is not part of the present invention, further includes:
a creating unit, configured to delay the time to execute the prompt for a predetermined time period and create a corresponding delayed prompt; and
a second cancelling unit, configured to acquire the signal indicating movement of the user within the predetermined time period periodically and cancel the delayed prompt if the user is in the moving state.

According to further examples of the present disclosure not being part of the present invention, there is provided an electronic device, including:
a processor; and
a memory for storing instructions executable by the processor,
wherein the processor is configured to:
   acquire a signal indicating movement of a user; and
   cancel a prompt if the user is in a moving state when a time to execute the prompt preset in the alarm clock is up.

The technical solution according to embodiments of the present disclosure may have the following advantageous effects. According to embodiments of the present disclosure, the signal indicating movement of the user is acquired such that whether the user wakes up or is still in sleep is acknowledged, so that user's demand on the prompt of the alarm clock is determined. At the same time, the prompt of the alarm clock may be cancelled automatically so as to prevent the user from being disturbed in the case that the user already wakes up and the prompt of the alarm clock is undesired, thereby promoting user's experience.

In the case, not being part of the present invention, that the alarm clock is provided with the movement sensor, the signal indicating movement of the user may be detected automatically without other devices, thereby decreasing complexity of achieving the technical solution of the present disclosure.

In the present invention, the signal indicating movement of the user is acquired by means of the device equipped with the movement sensor via a wireless communication established between the alarm clock and the device equipped with the movement sensor, thereby decreasing structural complexity of the alarm clock defined in the present invention.

The movement sensor may detect the movement of the user by being in direct contact with or close to the user. For example, the movement sensor may be a physiological parameter sensor disposed in a wearable device.

In the present invention, the movement sensor may be an infrared sensor, so as to identify the movement of the user even if the movement sensor is away from the user.

The delayed prompt is created automatically in accordance with the movement of the user, so as to prevent the user from falling asleep again or to prevent user's sleep status from being misjudged, thereby ensuring that the user may get up in time.

It is to be understood that both the foregoing general description and the following detailed description are illustrative and explanatory only and are not restrictive of the invention, the extent of which shall be determined by the appended claims.

### BRIEF DESCRIPTION OF THE DRAWINGS

The accompanying drawings, which are incorporated in and constitute a part of this specification, illustrate embodiments consistent with the disclosure and, together with the description, serve to explain the principles of the disclosure.
Fig. 1 is a flow chart showing a method for managing an alarm clock according to an illustrative embodiment in accordance with the present invention.
Fig. 2A is a schematic diagram showing an alarm clock according to an illustrative example not being part of the present invention.
Fig. 2B is a schematic diagram showing an application scenario of a method for managing an alarm clock according to an illustrative example not being part of the present invention.
Fig. 3 is a flow chart showing another method for managing an alarm clock according to an illustrative example useful for the understanding of the present invention.
Fig. 4A is a schematic diagram showing an alarm clock and a detecting device according to an illustrative embodiment in accordance with the present invention.
Fig. 4B is a schematic diagram showing an application scenario of another method for managing an alarm clock according to an illustrative embodiment in accordance with the present invention.
Fig. 5 is a flow chart showing a further method for managing an alarm clock according to an illustrative embodiment in accordance with the present invention.
Fig. 6 is a schematic diagram showing a detecting device according to an illustrative embodiment in accordance with the present invention.
Figs. 7 to 10 are block diagrams each showing a device for managing an alarm clock according to an illustrative example not being part of the present invention.
Fig. 11 is a schematic diagram showing a device for managing an alarm clock according to an illustrative example not being part of the present invention.

### DETAILED DESCRIPTION

Reference will now be made in detail to illustrative embodiments, examples of which are illustrated in the accompanying drawings. The following description refers to the accompanying drawings in which the same numbers in different drawings represent the same or similar elements unless otherwise represented. The implementations set forth in the following description of illustrative embodiments do not represent all implementations consistent with the disclosure. Instead, they are merely examples of apparatuses and methods consistent with aspects related to the disclosure. The extent of the invention shall however be determined by the appended claims.

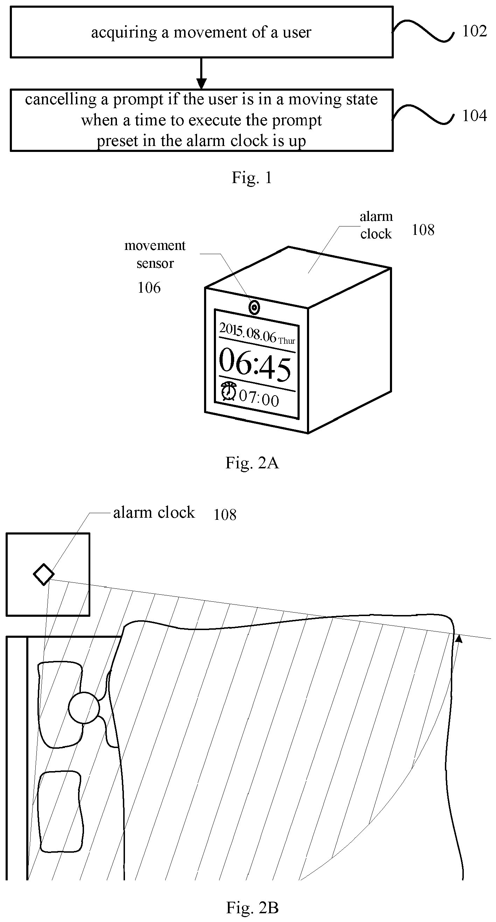

Fig. 1 is a flow chart showing a method for managing an alarm clock according to an illustrative embodiment in accordance with the present invention. Referring to Fig. 1, the method is used in an alarm clock or a mobile device having a function of an alarm clock, and includes the following steps.

In step 102, a signal indicating movement of a user is acquired.

In an illustrative embodiment not being part of the present invention, the signal indicating movement of the user may be detected directly by a movement sensor 106 disposed in the alarm clock, thereby decreasing complexity of achieving the technical solution of the present disclosure.

In the present invention, the signal indicating movement of the user is acquired by establishing a wireless communication with a device 318 equipped with a signal indicating movement sensor; and receiving the movement of the user detected by the movement sensor via the wireless communication, thereby decreasing structural complexity of the alarm clock defined in the present invention.

In step 104, a prompt is cancelled if the user is in a moving state when a time to execute the prompt preset in the alarm clock is up.

In the present embodiment, it is assumed that the time to execute the prompt initially preset is at 07:00. The expression of "cancelling the prompt" refers to cancelling a prompt to be executed at 07:00 on that very day, instead of no longer executing the prompt.

Further, the time to execute the prompt is delayed for a predetermined time period (e.g., 5 min) and a corresponding delayed prompt (referring to a prompt to be executed at 07:05) is created, such that the signal indicating movement of the user may be acquired within the predetermined time period periodically. In the case that it is detected that the user is in the moving state, the delayed prompt is cancelled. In the present embodiment, the delayed prompt is created automatically, so as to prevent the user from falling asleep again or to prevent user's sleep status from being misjudged, thereby ensuring that the user may get up in time.

As can be seen from the above embodiments, the signal indicating movement of the user is acquired such that whether the user already wakes up spontaneously or is still in sleep is acknowledged, so as to determine user's demand on the prompt of the alarm clock. At the same time, the prompt of the alarm clock may be cancelled automatically so as to prevent the user from being disturbed in the case that the user already wakes up and thus the prompt of the alarm clock is undesired, thereby improving user's experience.

In embodiments of the present disclosure, the "alarm clock" may be an independent alarm clock, or a mobile device having an alarm clock function, such as a smartphone. In order to facilitate understanding, the technical solution of the present disclosure is described in the following embodiments by taking an independent alarm clock as an example.

Fig. 2A is a schematic diagram showing an alarm clock according to an illustrative embodiment not being part of the present invention. As shown in Fig. 2A, in this illustrative embodiment, the alarm clock 106 is provided with a movement sensor 108. Accordingly, as shown in Fig. 2B, in an application scenario of a method for managing an alarm clock, the alarm clock may be placed at the bedside, so as to be capable of forming a detecting area (shown as the shadow area in Fig. 2B) directly by the movement sensor. During setting the alarm clock, the detecting area may be enabled to cover a movement area of a user, such that the alarm clock may directly detect the movement of the user.

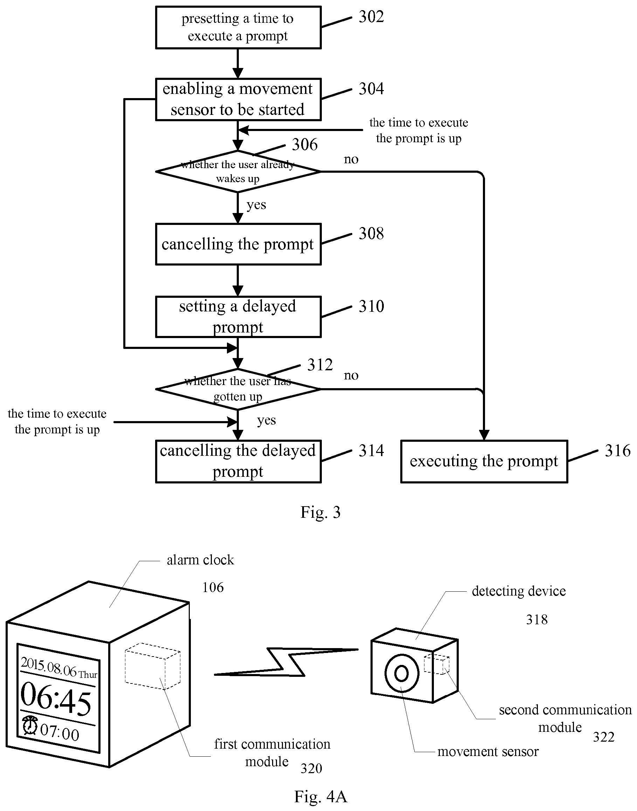

Accordingly, Fig. 3 is a flow chart showing another method for managing an alarm clock, according to an illustrative example useful for the understanding of the present invention. As shown in Fig. 3, the method may include the following steps.

In step 302, the alarm clock receives the time to execute the prompt preset by the user.

In the present example useful for the understanding of the present invention, it is assumed that the time to execute the prompt preset by the user is at 07:00 every morning, such an alarm clock enables the user to wake up every morning at 07:00 by means of giving the prompt (such as ringing) in the related art.

In step 304, which describes a specific step also present in the present invention, the alarm clock enables the movement sensor to be started.

The alarm clock may enable the movement sensor to be maintained in an ON state in the case that the time to execute the prompt has been set; or the alarm clock may enable the movement sensor to be started at a predetermined time preset before the time to execute the prompt on the very day. For example, when the time to execute the prompt is set at 07:00, the alarm clock may enable the movement sensor to be started at 06:30; while the movement sensor is obviously in an OFF state at 06:00, so as to reduce electricity consumption brought by the movement sensor, thereby extending a standby time period of the alarm clock.

In step 306, when the time to execute the prompt preset is up, it is determined whether the user already wakes up based on the movement of the user detected by the movement sensor. If it is determined that the user already wakes up, step 308 is performed; otherwise step 316 is performed.

In step 308, the prompt to be executed at 07:00 is cancelled.

In the present disclosure, in accordance with the present invention, the movement sensor may be any sensor capable of detecting a movement of a user in the related art, which is not limited herein. By way of example, the movement sensor may be an infrared sensor, so as to detect whether the user is in the moving state by emitting and receiving an infrared signal. Certainly, in order to distinguish user' movement during sleeping such as turning over, the movement sensor or the alarm clock may identify a level of the movement of the user. For example, it is determined that the user already wakes up only when detecting a great level of the movement of the user.

In the present example useful for the understanding of the present invention, the prompt is cancelled in the case that the user already wakes up, so as to prevent the user from suffering from disturbance caused by ringing of the alarm clock, particular those in a bad mood (i.e., "wrong side of the bed") after waking up in the morning. Therefore, in the case that the user already wakes up, it is unnecessary for the alarm clock to prompt the user to wake up, such that the cancelation of the prompt improves the user's experience.

In step 310, the alarm clock may delay the time to execute the prompt preset in step 302 for a predetermined time period automatically, thereby forming new time to execute the prompt; and a corresponding delayed prompt is created.

In the present example useful for the understanding of the present invention, it is assumed that the predetermined time period is 5 min, the time to execute the prompt set in step 302 is at 07:00, and new time to execute the prompt is at 07:05.

In step 312, when the new time to execute the prompt is up, it is determined whether the user has gotten up based on the movement of the user detected by the movement sensor. If it is determined that the user has gotten up, step 314 is performed; otherwise step 316 is performed.

In step 314, the delayed prompt is cancelled.

In step 316, the prompt is performed.

In the present example useful for the understanding of the present invention, because the alarm clock may misjudge the movement of the user resulting from the great level of movement during sleeping, such as turning over; or caused by going to bathroom during night (it is possible for the user to go sleeping again). Therefore, the cancellation of the prompt to be executed in step 308 may cause the user to be unable to get up in time based on the above or other cases.

As a result, in the present example useful for the understanding of the present invention, the delayed prompt is automatically set up, so as to ensure that the user gets up indeed by continuing detecting the movement of the user. The movement of the user may be periodically acquired within the predetermined time period (e.g., during 07:00 to 07:05) before the time to execute the delayed prompt is up. The delayed prompt is cancelled if it is detected that the user is in the moving state. For example, in the case that a detecting period is 1 min, it is required that the user is in the moving state at every time the detection is performed, instead of at any time.

Fig. 4A is a schematic diagram showing an alarm clock 106 and a detecting device 316, according to an illustrative embodiment according to the present invention. As shown in Fig. 4A, in this illustrative embodiment, the alarm clock is not provided with the movement sensor, then an external detecting device is provided to detect the user' movement. The detecting device is provided with a movement sensor, and the alarm clock and the detecting device are provided with a first communication module 320 and a second communication module 322, respectively, such that a wireless communication is established between the alarm clock and the detecting device, and thus the alarm clock acquires the movement of the user detected by the movement sensor inside the detecting device. The wireless communication between the alarm clock and the detecting device may be established in any way, such as Bluetooth, WIFI and NFC. The wireless communication between the alarm clock and the detecting device may be a communication in a point-to-point manner; or a communication by joining in one same local area network at the same time, which is not limited herein.

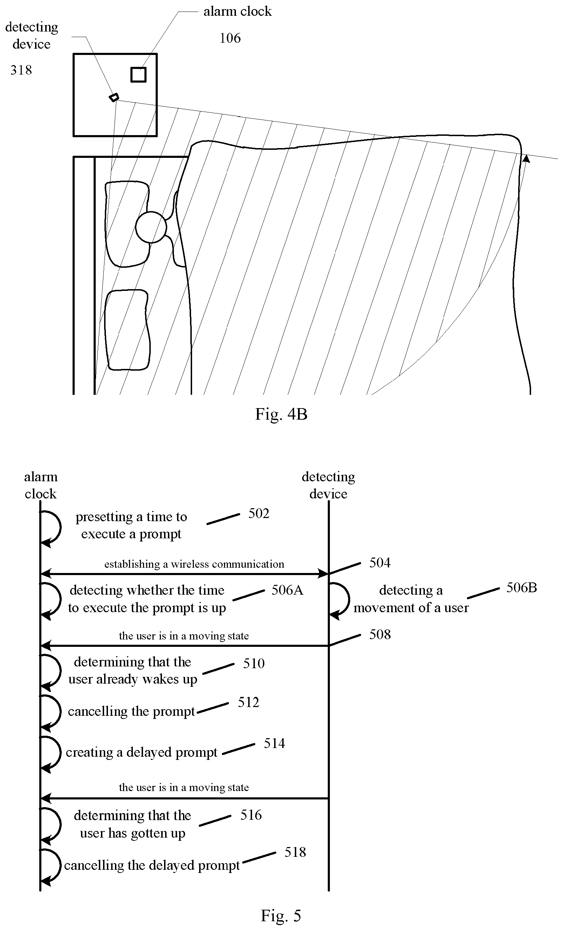

Accordingly, as shown in Fig. 4B, in an application scenario of a method for managing an alarm clock according to the present invention, both the alarm clock and the detecting device may be place at the bedside, so that the detecting device is able to form a detecting area (shown as the shadow area in Fig. 4B) by the movement sensor. During setting the detecting device, the detecting area is enabled to cover a movement area of a user, so that the movement of the user is detected by the detecting device.

Accordingly, Fig. 5 is a flow chart showing a further method for managing an alarm clock, according to an illustrative embodiment of the present invention. As shown in Fig. 5, the method includes the following steps.

In step 502, the alarm clock receives the time to execute the prompt preset by the user.

In the present embodiment, it is assumed that the time to execute the prompt preset by the user is at 07:00 every morning, such an alarm clock enables the user to wake up every morning at 07:00 by giving the prompt (such as ringing) as in the related art.

In step 504, a wireless communication is established between the alarm clock and the detecting device.

In the present embodiment, the wireless communication is established between the alarm clock and the detecting device in any way, such as Bluetooth, WIFI and NFC, which is not limited herein. The wireless communication between the alarm clock and the detecting device may be a direct communication in a point-to-point manner; or a communication by joining in one same local area network at the same time, which is not limited herein.

There is no necessary sequential order between steps 502 and 504. For example, the wireless communication may be established at first, and then the time to execute the prompt is set.

In step 506A, the alarm clock compares a current time and the time to execute the prompt, so as to determine whether the time to execute the prompt is up.

In step 506B, the movement of the user is detected by the detecting device, this step is equivalent to step 304 in Fig. 3, which is not described in detail herein.

There is no necessary sequential order between steps 506A and 506B.

In step 508, if it is detected that the user is in the moving state, the detecting device informs the alarm clock of the obtained detecting result.

In the present embodiment, the detecting device may directly inform the alarm clock of a detecting result obtained by the movement sensor, rather than identify the movement of the user. The alarm clock identifies the movement of the user, so as to determine whether the user is in the moving state.

In step 510, when the time to execute the prompt is up, it is determined whether the user is in the moving state. If it is determined that the user is in the moving state, step 512 is performed; otherwise the prompt is executed.

In step 512, the prompt to be executed at 07:00 is cancelled, this step is equivalent to step 308 in Fig. 3, which is not described in detail herein.

In step 514, the alarm clock may delay the time to execute the prompt preset in step 502 for a predetermined time period automatically, thereby forming new time to execute the prompt; and a corresponding delayed prompt is created.

In the present embodiment, it is assumed that the predetermined time period is 5 min, the time to execute the prompt set in step 502 is 07:00, and new time to execute the prompt is 07:05.

In step 516, when the new time to execute the prompt is up, it is determined whether the user has gotten up based on the movement of the user detected by the movement sensor. If it is determined that the user has gotten up, step 518 is performed; otherwise the delayed prompt is executed.

In step 518, the delayed prompt is cancelled, this step is equivalent to step 314 in Fig. 3, which is not described in detail herein.

It should be noted that the alarm clock alone (as shown in Fig. 2A-2B) or along with the external detecting device which is equipped with the movement sensor (as shown in Fig. 4A-4B) is at a certain distance from the user, when detecting the movement of the user. As a matter of fact, the detecting device may be in direct contact with or located around the user (e.g., a distance between the detecting device and the user is no more than a predetermined distance) on the basis that the alarm clock is spaced apart from the user, so as to detect a user's physiological feature, and acquire the movement of the user.

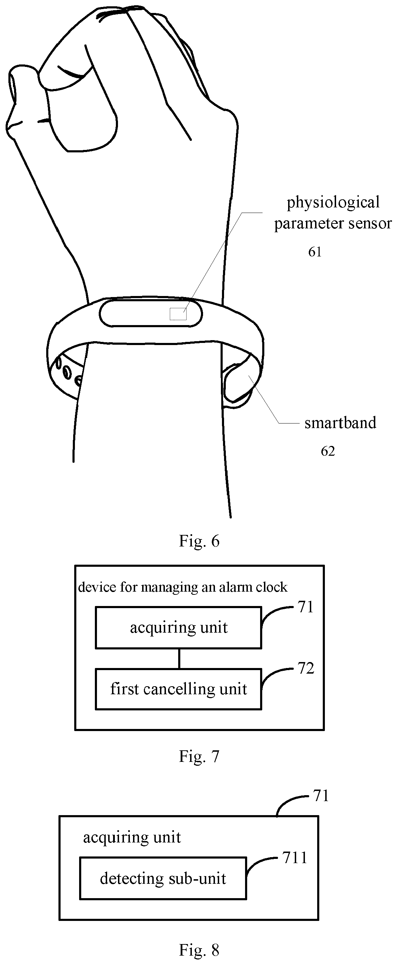

By way of example, as shown in Fig. 6, the detecting device may be a wearable device 62 (such as a smartband) which may be provided with a physiological parameter sensor 61, serving as the movement sensor of the present disclosure. The physiological parameter sensor may detect the user's physiological feature preset, such as heartbeat frequency, pressure value and breath rhythm, thereby acquiring the movement of the user more accurately.

Corresponding to the method for managing the alarm clock in the above embodiment, there is provided a device for managing an alarm clock in an example not being part of the present invention.

Fig. 7 is a block diagram showing a device for managing an alarm clock according to an illustrative example not being part of the present invention. Referring to Fig. 7, the device includes an acquiring unit 71 and a first cancelling unit 72.

The acquiring unit 71 is configured to acquire a signal indicating movement of a user.

The first cancelling unit 72 is configured to cancel a prompt if the user is in a moving state when a time to execute the prompt preset in the alarm clock is up.

Fig. 8 is a block diagram showing another device for managing an alarm clock according to an illustrative example not being part of the present invention. On the basis of the embodiment as shown in Fig. 7, the acquiring unit 71 may further include a detecting sub-unit 711.

The detecting sub-unit 711 is configured to detect the signal indicating movement of the user by a movement sensor disposed in the alarm clock.

Alternatively, the movement sensor includes: an infrared sensor located around the user and having a sending-and-receiving window facing towards an area where the user is.

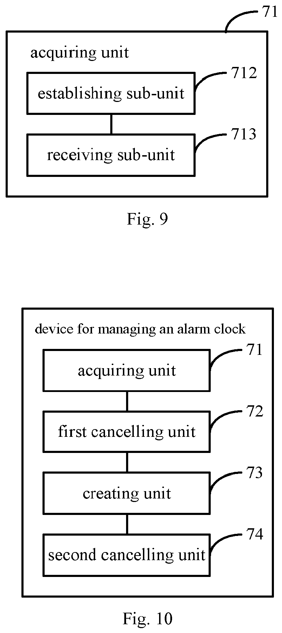

Fig. 9 is a block diagram showing a further device for managing an alarm clock according to an illustrative example not being part of the present invention. On the basis of the embodiment as shown in Fig. 7, the acquiring unit 71 may further include: an establishing sub-unit 712 and a receiving sub-unit 713.

The establishing sub-unit 712 is configured to establish a wireless communication with a device equipped with a movement sensor.

The receiving sub-unit 713 is configured to receive the signal indicating movement of the user detected by the movement sensor via the wireless communication.

Alternatively, in the case that the device equipped with the movement sensor is a wearable device, the movement sensor includes: a physiological parameter sensor.

Alternatively, the movement sensor includes: an infrared sensor located around the user and having a sending-and-receiving window facing towards an area where the user is.

Fig. 10 is a block diagram showing a yet further device for managing an alarm clock according to an illustrative example not being part of the present invention. On the basis of the embodiment as shown in Fig. 7, the device may further include: a creating unit 73 and a second cancelling unit 74.

The creating unit 73 is configured to delay the time to execute the prompt for a predetermined time period and create a corresponding delayed prompt.

The second cancelling unit 74 is configured to acquire the movement of the user within the predetermined time period periodically and cancel the delayed prompt if it is determined that the user is in the moving state.

It should be noted that the creating unit 73 and the second cancelling unit 74 in the device embodiment as shown in Fig. 10 may be also included in the device example as shown in Fig. 8 or 9, which is not limited herein.

With respect to the devices in the above examples not being part of the present invention, the specific manners for performing operations for individual modules therein have been described in detail in the examples regarding the methods for managing the alarm clock, which will not be elaborated herein.

Since the device examples substantially correspond to the method examples reference is made to description for the method examples as to details not disclosed in the device examples. The above-described device examples are merely for the purpose of illustration, and are not part of the present invention. Those units described as separated components may be or may not be physically separated; those units described as a display component may be or may not be a physical unit, i.e., either located at one place or distributed onto a plurality of network units. The object of the present disclosure may be achieved by part or all of modules in accordance with practical requirements. It would be appreciated and executable by those skilled in the art without creative labor.

Accordingly, the present disclosure further provides in examples not being part of the present invention, an electronic device, including a processor; and a memory for storing instructions executable by the processor. The processor is configured to: acquire a signal indicating movement of a user; and cancel a prompt if the user is in a moving state when a time to execute the prompt preset in the alarm clock is up.

Accordingly, the present disclosure further provides in examples not being part of the invention, a terminal, including a memory; and one or more programs stored in the memory, configured to be executed by one or more processors, and including the following instructions for executing: acquiring a signal indicating movement of a user; and cancelling a prompt if the user is in a moving state when a time to execute the prompt preset in the alarm clock is up.

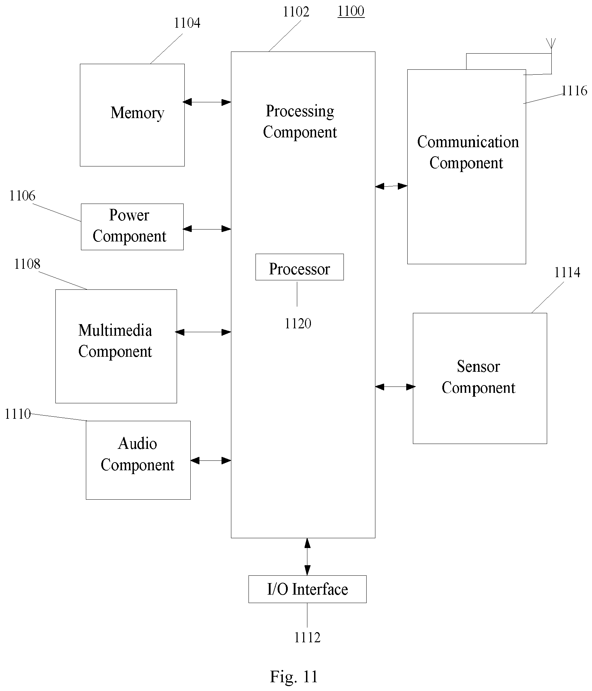

Fig. 11 is a block diagram showing a device 1100 for managing an alarm clock according to an illustrative example not being part of the present invention. For example, the device 1100 may be an alarm clock, a mobile phone, a computer, a digital broadcast terminal, a message receiving and sending device, a gaming console, a tablet device, a medical device, exercise equipment, a personal digital assistant, and the like.

Referring to Fig. 11, the device 1100 may include one or more of the following components: a processing component 1102, a memory 1104, a power component 1106, a multimedia component 1108, an audio component 1110, an input/output (I/O) interface 1112, a sensor component 1114, and a communication component 1116.

The processing component 1102 typically controls overall operations of the device 1100, such as the operations associated with display, telephone calls, data communications, camera operations, and recording operations. The processing component 1102 may include one or more processors 1120 to execute instructions to perform all or part of the steps in the above described methods. Moreover, the processing component 1102 may include one or more modules which facilitate the interaction between the processing component 1102 and other components. For instance, the processing component 1102 may include a multimedia module to facilitate the interaction between the multimedia component 1108 and the processing component 1102.

The memory 1104 is configured to store various types of data to support the operation of the device 1100. Examples of such data include instructions for any applications or methods operated on the device 1100, contact data, phonebook data, messages, pictures, video, etc. The memory 1104 may be implemented using any type of volatile or non-volatile memory devices, or a combination thereof, such as a static random access memory (SRAM), an electrically erasable programmable read-only memory (EEPROM), an erasable programmable read-only memory (EPROM), a programmable read-only memory (PROM), a read-only memory (ROM), a magnetic memory, a flash memory, a magnetic or optical disk.

The power component 1106 provides power to various components of the device 1100. The power component 1106 may include a power management system, one or more power sources, and any other components associated with the generation, management, and distribution of power in the device 1100.

The multimedia component 1108 includes a screen providing an output interface between the device 1100 and the user. In some embodiments, the screen may include a liquid crystal display (LCD) and a touch panel (TP). If the screen includes the touch panel, the screen may be implemented as a touch screen to receive input signals from the user. The touch panel includes one or more touch sensors to sense touches, swipes, and gestures on the touch panel. The touch sensors may not only sense a boundary of a touch or swipe action, but also sense a period of time and a pressure associated with the touch or swipe action. In some embodiments, the multimedia component 1108 includes a front camera and/or a rear camera. The front camera and/or the rear camera may receive an external multimedia datum while the device 1100 is in an operation mode, such as a photographing mode or a video mode. Each of the front camera and the rear camera may be a fixed optical lens system or have focus and optical zoom capability.

The audio component 1110 is configured to output and/or input audio signals. For example, the audio component 1110 includes a microphone ("MIC") configured to receive an external audio signal when the device 1100 is in an operation mode, such as a call mode, a recording mode, and a voice recognition mode. The received audio signal may be further stored in the memory 1104 or transmitted via the communication component 1116. In some embodiments, the audio component 1110 further includes a speaker to output audio signals.

The I/O interface 1112 provides an interface between the processing component 1102 and peripheral interface modules, such as a keyboard, a click wheel, buttons, and the like. The buttons may include, but are not limited to, a home button, a volume button, a starting button, and a locking button.

The sensor component 1114 includes one or more sensors to provide status assessments of various aspects of the device 1100. For instance, the sensor component 1114 may detect an open/closed status of the device 1100, relative positioning of components, e.g., the display and the keypad, of the device 1100, a change in position of the device 1100 or a component of the device 1100, a presence or absence of user contact with the device 1100, an orientation or an acceleration/deceleration of the device 1100, and a change in temperature of the device 1100. The sensor component 1114 may include a proximity sensor configured to detect the presence of nearby objects without any physical contact. The sensor component 1114 may also include a light sensor, such as a CMOS or CCD image sensor, for use in imaging applications. In some embodiments, the sensor component 1114 may also include an accclcromctcr sensor, a gyroscope sensor, a magnetic sensor, a pressure sensor, or a temperature sensor.

The communication component 1116 is configured to facilitate communication, wired or wirelessly, between the device 1100 and other devices. The device 1100 can access a wireless network based on a communication standard, such as WiFi, 2G, or 3G, or a combination thereof. In one illustrative embodiment, the communication component 1116 receives a broadcast signal or broadcast associated information from an external broadcast management system via a broadcast channel. In one illustrative embodiment, the communication component 1116 further includes a near field communication (NFC) module to facilitate short-range communications. For example, the NFC module may be implemented based on a radio frequency identification (RFID) technology, an infrared data association (IrDA) technology, an ultra-wideband (UWB) technology, a Bluetooth (BT) technology, and other technologies.

In illustrative examples the device 1100, which is not part of the present invention, may be implemented with one or more application specific integrated circuits (ASICs), digital signal processors (DSPs), digital signal processing devices (DSPDs), programmable logic devices (PLDs), field programmable gate arrays (FPGAs), controllers, micro-controllers, microprocessors, or other electronic components, for performing the above described methods.

In illustrative examples not being part of the invention, there is also provided a non-transitory computer-readable storage medium including instructions, such as included in the memory 1104, executable by the processor 1120 in the device 1100, for performing the above-described methods. For example, the non-transitory computer-readable storage medium may be a ROM, a RAM, a CD-ROM, a magnetic tape, a floppy disc, an optical data storage device, and the like.

The present invention is not limited to the disclosed embodiments of this disclosure, rather the extent of the present invention shall be determined by the appended claims.

## Claims

1. A method for managing an alarm clock (106)
wherein
- (504) a wireless communication is established between an alarm clock (106) and a detecting device (318) external to the alarm clock (106), said detecting device (318) provided with a movement sensor;
wherein
- (506 A) the alarm clock (106) compares a current time with a time to execute a preset prompt so as to determine whether the time to execute the prompt is up; wherein
- (304) the movement sensor is enabled by the alarm clock to be started at a prearranged time preset before the time to execute the preset prompt; and wherein
(508) when the time to execute the preset prompt is up, the alarm clock identifies whether a user is in a moving state or not;
and
- if it is determined that the user is not in a moving state, then the preset prompt is executed, and
- (510) if it is determined that the user is in a moving state, (512) then the preset prompt to be executed is cancelled and the alarm clock delays the time to execute the preset prompt for a predetermined time period automatically, thereby (514) creating a corresponding delayed prompt;
wherein during the predetermined time a movement signal from the detecting device is periodically acquired, and
- (516) if it is determined that the user is in a moving state, (518) then the corresponding delayed prompt is cancelled,
and
- if it is determined that the user is not in a moving state, then the corresponding delayed prompt is executed.

2. The method according to claim 1, wherein the movement sensor comprises: an infrared sensor located around the user and having a receiving-and-sending window facing towards an area where the user is.

3. A system comprising an alarm clock (106) and a detecting device (318) external to said alarm clock (106);
said detective device (318) provided with a movement sensor;
said alarm clock (106) provided with a first communication module (320) and said detecting device provided with a second communication module (322);
wherein the alarm clock (106) is configured to:
- acquire a user movement though a wireless communication established between the alarm clock (106) and the detecting device (318);
- compare a current time with a time to execute a preset prompt so as to determine whether the time to execute the prompt is up;
- enable the movement sensor to be started at a prearranged time before the time to execute the prompt;
- identify, when the time to execute the preset prompt is up, whether the user is in a moving state or not;
and wherein the alarm clock (106) is further configured such that:
- if it is determined the user is not in a moving state, then the preset prompt is executed,
and
- if it is determined that the user is in a moving state, then the preset prompt to be executed is cancelled and the time to execute the present prompt is delayed for a predetermined time automatically, thereby creating a corresponding delayed prompt;
wherein the alarm clock (106) is further configured to periodically acquire during the predetermined time a movement signal from the detecting device (318);
and wherein the alarm clock (106) is further configured such that during the predetermined time:
- if it is determined that the user is in a moving state, then the corresponding delayed time is cancelled,
and
- if it is determined that the user is not in a moving state, then the corresponding delayed prompt is executed.

4. The system according to claim 3,
wherein the movement sensor (106) comprises: an infrared sensor located around the user and having a receiving-and-sending window facing towards an area where the user is.

## Patentansprüche

1. Verfahren zum Verwalten einer Weckuhr (106), wobei
- (504) drahtlose Kommunikation zwischen einer Weckuhr (106) und einer Detektionsvorrichtung (318) außerhalb der Weckuhr (106) hergestellt wird, wobei die genannte Detektionsvorrichtung (318) mit einem Bewegungssensor versehen ist; wobei
- (506 A) die Weckuhr (106) eine aktuelle Zeit mit einer Zeit zum Ausführen einer voreingestellten Aufforderung vergleicht, um festzustellen, ob die Zeit zum Ausführen der Aufforderung abgelaufen ist; wobei
- (304) das Starten des Bewegungssensors durch die Weckuhr zu einer vor der Zeit zum Ausführen der voreingestellten Aufforderung voreingestellten Zeit freigegeben wird; und wobei
- (508) die Weckuhr identifiziert, wenn die Zeit zum Ausführen der voreingestellten Aufforderung abgelaufen ist, ob ein Benutzer in einem Bewegungszustand ist oder nicht; und
- wenn festgestellt wird, dass der Benutzer nicht in einem Bewegungszustand ist, die voreingestellte Aufforderung ausgeführt wird, und
- (510) wenn festgestellt wird, dass der Benutzer in einem Bewegungszustand ist, (512) die auszuführende voreingestellte Aufforderung storniert wird und die Weckuhr die Zeit zur Ausführung der voreingestellten Aufforderung automatisch um eine vorbestimmte Zeitdauer verzögert, wodurch (514) eine entsprechende verzögerte Aufforderung erzeugt wird;
wobei während der vorbestimmten Zeit ein Bewegungssignal von der Detektionsvorrichtung periodisch erfasst wird, und
- (516) wenn festgestellt wird, dass der Benutzer in einem Bewegungszustand ist, (518) die entsprechende verzögerte Aufforderung storniert wird, und
- wenn festgestellt wird, dass der Benutzer nicht in einem Bewegungszustand ist, die entsprechende verzögerte Aufforderung ausgeführt wird.

2. Verfahren nach Anspruch 1, wobei der Bewegungssensor Folgendes umfasst: einen Infrarotsensor, der sich um den Benutzer herum befindet und ein Empfangs- und Sendefenster aufweist, das auf einen Bereich gerichtet ist, in dem sich der Benutzer befindet.

3. System mit einer Weckuhr (106) und einer Detektionsvorrichtung (318) außerhalb der genannten Weckuhr (106) ;
wobei die genannte Detektionsvorrichtung (318) mit einem Bewegungssensor versehen ist;
wobei die genannte Weckuhr (106) mit einem ersten Kommunikationsmodul (320) und die genannte Detektionsvorrichtung mit einem zweiten Kommunikationsmodul (322) versehen ist;
wobei die Weckuhr (106) konfiguriert ist zum:
- Erfassen einer Benutzerbewegung durch eine zwischen der Weckuhr (106) und der Detektionsvorrichtung (318) hergestellte drahtlose Kommunikation;
- Vergleichen einer aktuellen Zeit mit einer Zeit zum Ausführen einer voreingestellten Aufforderung, um festzustellen, ob die Zeit zum Ausführen der Aufforderung abgelaufen ist;
- Ermöglichen des Startens des Bewegungssensors zu einer voreingestellten Zeit vor der Zeit zum Ausführen der Aufforderung;
- Identifizieren, wenn die Zeit zum Ausführen der voreingestellten Aufforderung abgelaufen ist, ob der Benutzer in einem Bewegungszustand ist oder nicht;
und wobei die Weckuhr (106) ferner so konfiguriert ist, dass:
- wenn festgestellt wird, dass der Benutzer nicht in einem Bewegungszustand ist, die voreingestellte Aufforderung ausgeführt wird, und
- wenn festgestellt wird, dass der Benutzer in einem Bewegungszustand ist, die auszuführende voreingestellte Aufforderung storniert und die Zeit zur Ausführung der gegenwärtigen Aufforderung automatisch um eine vorbestimmte Zeit verzögert wird, wodurch eine entsprechende verzögerte Aufforderung erzeugt wird;
wobei die Weckuhr (106) ferner zum periodischen Erfassen eines Bewegungssignals von der Detektionsvorrichtung (318) während der vorbestimmten Zeit konfiguriert ist;
und wobei die Weckuhr (106) ferner so konfiguriert ist, dass während der vorbestimmten Zeit:
- wenn festgestellt wird, dass der Benutzer in einem Bewegungszustand ist, die entsprechende verzögerte Zeit storniert wird, und
- wenn festgestellt wird, dass der Benutzer nicht in einem Bewegungszustand ist, die entsprechende verzögerte Aufforderung ausgeführt wird.

4. System nach Anspruch 3, wobei der Bewegungssensor (106) Folgendes umfasst: einen Infrarotsensor, der sich um den Benutzer herum befindet und ein Empfangs- und Sendefenster aufweist, das auf einen Bereich gerichtet ist, in dem sich der Benutzer befindet.

## Revendications

1. Procédé de gestion d'une horloge d'alarme (106)
dans lequel
- (504) une communication sans fil est établie entre une horloge d'alarme (106) et un dispositif de détection (318) externe à l'horloge d'alarme (106), le dispositif de détection (318) étant doté d'un capteur de mouvement ; dans lequel
- (506 A) l'horloge d'alarme (106) compare un temps courant à un temps d'exécution d'un message-guide préétabli de manière à déterminer qu'il est temps ou non d'exécuter le message-guide ; dans lequel
- (304) le capteur de mouvement est activé par l'horloge d'alarme pour être lancé à un temps prédéfini préétabli avant le temps d'exécution du message-guide préétabli ; et dans lequel (508) quand il est temps d'exécuter le message-guide préétabli, l'horloge d'alarme identifie qu'un utilisateur est en mouvement ou non ;
et
- s'il est déterminé que l'utilisateur n'est pas en mouvement, le message-guide préétabli est alors exécuté, et
- (510) s'il est déterminé que l'utilisateur est en mouvement, (512) le message-guide préétabli à exécuter est alors annulé et l'horloge d'alarme retarde automatiquement le temps d'exécution du message-guide préétabli par une période de temps prédéterminée, créant ainsi (514) un message-guide retardé correspondant ;
dans lequel durant la période prédéterminée un signal de mouvement est acquis périodiquement à partir du dispositif de détection, et
- (516) s'il est déterminé que l'utilisateur est en mouvement, (518) le message-guide retardé correspondant est alors annulé,
et
- s'il est déterminé que l'utilisateur n'est pas en mouvement, le message-guide retardé correspondant est exécuté.

2. Procédé selon la revendication 1, dans lequel le capteur de mouvement comprend :
un capteur infrarouge situé autour de l'utilisateur et comportant une fenêtre de réception et d'envoi faisant face à une zone où se trouve l'utilisateur.

3. Système comprenant une horloge d'alarme (106) et un dispositif de détection (318) externe à ladite horloge d'alarme (106) ;
ledit dispositif de détection (318) étant doté d'un capteur de mouvement ;
ladite horloge d'alarme (106) étant dotée d'un premier module de communication (320) et ledit dispositif de détection étant doté d'un second module de communication (322) ;
dans lequel l'horloge d'alarme (106) est configurée pour :
- acquérir un mouvement d'utilisateur par le biais d'une communication sans fil établie entre l'horloge d'alarme (106) et le dispositif de détection (78) ;
- comparer un temps courant à un temps d'exécution d'un message-guide préétabli de manière à déterminer qu'il est temps ou non d'exécuter le message-guide ;
- activer le capteur de mouvement pour le lancer à un temps préétabli avant le temps d'exécution du message-guide ;
- identifier, quand il est temps d'exécuter le message-guide préétabli, que l'utilisateur est en mouvement ou non ;
et dans lequel l'horloge d'alarme (106) est configurée en outre de telle sorte que :
- s'il est déterminé que l'utilisateur n'est pas en mouvement, le message-guide préétabli soit alors exécuté,
et
- s'il est déterminé que l'utilisateur est en mouvement, le message-guide préétabli à exécuter soi alors annulé et le temps d'exécution du présent message-guide soit retardé automatiquement par un temps prédéterminé, créant ainsi un message-guide retardé correspondant ;
dans lequel l'horloge d'alarme (106) est configurée en outre pour acquérir périodiquement à partir du dispositif de détection (78) durant le temps prédéterminé un signal de mouvement ;
et dans lequel l'horloge d'alarme (106) est configurée en outre de telle sorte que durant le temps prédéterminé :
- s'il est déterminé que l'utilisateur est en mouvement, le temps retardé correspondant soit annulé, et
- s'il est déterminé que l'utilisateur n'est pas en mouvement, le message-guide retardé correspondant soit exécuté.

4. Système selon la revendication 3, dans lequel le capteur de mouvement (106) comprend : un capteur infrarouge situé autour de l'utilisateur et présentant une fenêtre de réception et d'envoi faisant face à une zone où se trouve l'utilisateur.
